# EUROPEAN PATENT APPLICATION

(11) **EP 1 191 773 A2**
(43) Date of publication of application: **27.03.2002**
(21) Application number: 01305753.4
(22) Date of filing: 03.07.2001
(51) Int. Cl.: H04M 7/00

(54) **Internet phone**

(30) Priority: 25.09.2000 US 668340
(71) Applicant: New Technology Co. Ltd., San Po Kong, Kowloon, Hong Kong (CN)
(72) Inventor: Wong, Steven Ka Wah, 34 Tai Yau Street, San Po Kong, Kowloon (JP)
(74) Representative: Godwin, Edgar James

(57) **Abstract**

An Internet phone device (100) for use in combination with a conventional telephone circuit, a handset (120) and a bell (113) for voice communication with an equivalent Internet phone device (100) over the Internet including a server capable of invoking a wireless communication network, such as a POCSAG pager network. The phone device (100) comprises a keypad (111) for entering a code identifying a recipient phone device (100), connection means (15 & 16) for establishing a connection to the Internet via an ISP to provide the server with the code via the Internet for issuing and transmitting an outgoing call request signal via the network for the recipient phone device (100), and a radio-frequency receiver (18) for receiving the call request signal from a caller phone device (100). The connection means (15 & 16) is arranged to automatically establish a connection to the caller phone device (100) via the Internet upon receipt of the call request signal. The bell (113) is arranged to generate a ringing signal upon Internet connection established between the caller and recipient phone devices (100) to alert the recipient to pick up the handset (120) to conduct conversation with the caller over the Internet.

## Description

The present invention relates to an Internet phone and/or to an Internet phone device for use in conjunction with a conventional telephone.

### BACKGROUND OF THE INVENTION

Internet phones (also known as IP phones) are becoming increasingly popular, which is particularly the case for long distance communication because phone calls are charged according to the Internet time spent rather than the conventional telephone line time which is far more expensive.

It is known that callers are required to make a normal long distance telephone call in order to initiate an Internet phone call, by verbally asking the call recipients to switch to the Internet phone. The method is economically unattractive because the initial long distance telephone call is relatively expensive, and is cumbersome of course. Alternatively, the users can connect their phones to the Internet all the times and wait for a call, and this often turns out to be a waste of the Internet connection time and costs especially for low volume users. In most cases, the cost of initiating or waiting for an Internet call is higher than the time cost of the conversation itself.

The invention seeks to mitigate or at least alleviate such problems by providing an improved Internet phone.

### SUMMARY OF THE INVENTION

According to the invention, there is provided an Internet phone device for use in combination with a conventional telephone circuit, a handset and an audio indicator for voice communication with an equivalent Internet phone device over the Internet including a server capable of invoking a wireless communication network, which phone device comprises an input device for entering a code identifying a recipient phone device, connection means for establishing a connection to the Internet via an ISP to provide said server with said code via the Internet for issuing and transmitting an outgoing call request signal via said network for said recipient phone device, and a radio-frequency receiver for receiving said call request signal from a caller phone device, said connection means being arranged to automatically establish a connection to said caller phone device via the Internet upon receipt of said call request signal, said audio indicator being arranged to generate an audio signal upon Internet connection established between said caller and recipient phone devices to alert the recipient to pick up the handset to conduct conversation with the caller over the Internet.

In a first preferred embodiment, the Internet phone device is a self-contained Internet phone incorporating said conventional telephone circuit, handset and audio indicator.

In a second preferred embodiment, the Internet phone device is an accessory for connection to a conventional telephone incorporating said telephone circuit, handset and audio indicator.

Preferably, the connection means comprises a modem and a telephone line circuit for connection to an external telephone line, and an optional network adapter for connection to a local area network capable of connecting to the Internet.

It is preferred that the call request signal comprises a recipient ID, a caller ID and a caller IP address as assigned by an ISP.

More preferably, the code comprises an recipient ID, and the recipient ID of the call request signal is modified for the wireless communication network corresponding to the original recipient ID.

Further more preferably, said recipient phone device is arranged to connect via the Internet to said caller phone device with the supply of the original recipient ID.

It is further preferred that said caller phone device is arranged, upon successful connection to said recipient phone device, to signal said server for release thereof.

In a preferred construction, the radio-frequency receiver is provided with an antenna for receiving said call request signal.

The aforesaid Internet phone device may preferably include a microprocessor-based main control unit which connects all the other major circuit components together for co-operation and control.

### BRIEF DESCRIPTION OF DRAWINGS

The invention will now be more particularly described, by way of example only, with reference to the accompanying drawings, in which:
Figure 1 is a functional block diagram of a first embodiment of an Internet phone device in accordance with the invention;
Figure 2 is a functional block diagram of a second embodiment of an Internet phone device in accordance with the invention;
Figure 3 is a schematic diagram showing the environment in which two phones of Figure 1 or 2 may be used; and
Figures 4A to 4D illustrates the procedures of making a voice call from one phone to another phone of Figure 1 or 2.

### DETAILED DESCRIPTION OF PREFERRED EMBODIMENTS

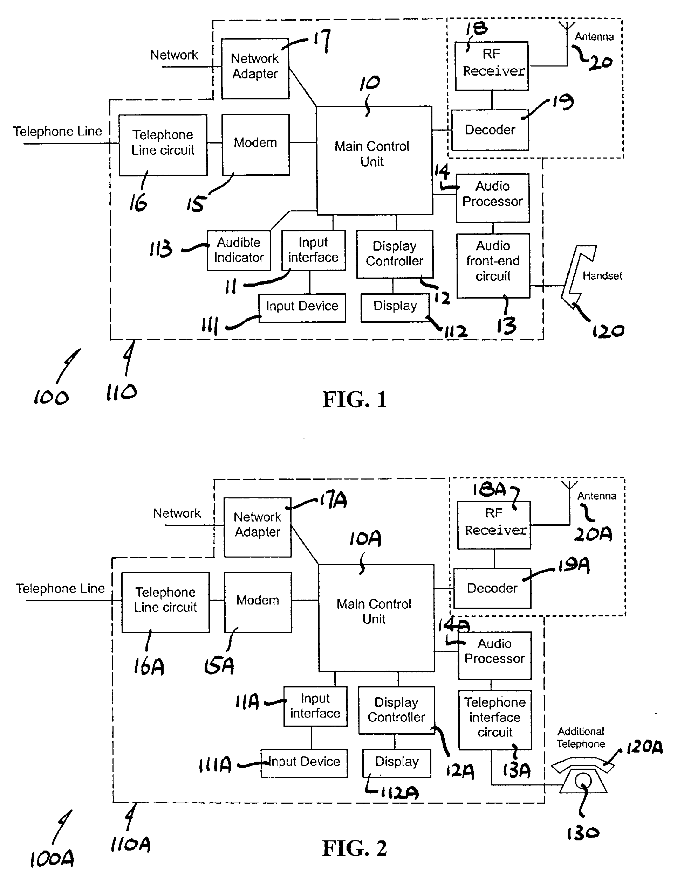

Referring initially to Figure 1 of the drawings, there is shown a first Internet phone device in the form of an Internet phone 100 embodying the invention, which phone 100 has a base 110 and a handset 120 connected thereto. The base 110 has a keypad (or touch panel) 111 for dialling and data input, an LCD display 112 for displaying data and messages and an audio indicator in the form of a bell 113 for generating a ringing signal, and includes an antenna 20. The base 110 houses an electronic operating circuitry built based on a microprocessor-based main control unit 10 which includes MCU, RAM, ROM and bus controller, etc and connects all the other major circuit components together for co-operation and control.

The keypad 111 and the display 112 are connected to the control unit 10 via an input interface 11 and a display controller 12 respectively. The handset 120 is connected to the control unit 10 via an audio front-end circuit 13 and an audio processor 14.

The audio front-end circuit 13 serves to convert an analogue audio signal picked up by the handset 120 into a digital signal for the audio processor 14, and to convert a digital signal received from the audio processor 14 into an analogue audio signal for the handset 120. The audio processor 14 incorporates one or two DSP (digital signal processor) chips to compress and encode a digitised signal of the handset 120 for transmission over the Internet, and to decompress and decode an incoming digital signal received from the Internet for the handset 120.

The operating circuitry includes a modem 15 connected to the control unit 10 and a telephone line circuit 16 for connecting the modem 15 to an external telephone line. The modem 15 is used to modulate the outgoing digital signal into a format suitable for transmission via the telephone line over the Internet and to demodulate the incoming digital signal, thereby enabling the conduction of a telephone conversation and/or transmission of a message over the Internet.

The operating circuitry includes an optional network adapter 17 for connecting the control unit 10 to an existing local area network (instead of a telephone line) capable of connecting to the Internet, which is particularly useful when a leased line is already in place in connection to the Internet.

The operating circuitry further includes an RF (radio-frequency) receiver 18 incorporating a decoder 19, which is connected in series between the control unit 10 and the antenna 20. The RF receiver 18 serves to receive, by means of the antenna 20, a call request signal and to amplify and demodulate the signal and then feed it to the decoder 19 for decoding and extraction of relevant call request and connection data. The call request signal is to be issued by means of any existing wireless communication network system, such as FLEX and POCSAG (for pagers) and GSM, PCS and PHS (for mobile phones), etc.

The Internet phone 100 is a stand-alone or self-contained unit incorporating built-in standard telephone components and functions. Figure 2 shows a second Internet phone device 100A embodying the invention, which is an accessory in the form of a box for connection to a conventional telephone 130 for use. The combination has substantially the same configuration and operates in substantially the same manner as the Internet phone 100, with equivalent parts designated by the same reference numerals suffixed by a letter "A". The major differences lie in the bell 113 of the Internet phone 100 being now provided as part of the conventional telephone 130, and the audio front-end circuit 13 being now replaced by a telephone interface circuit 13A to enable the transfer of signals/data with the telephone 130.

Throughout the remainder of the description, only the Internet phone 100 and its components will be referred to for simplicity, with their reference numerals suffixed by an apostrophe as necessary to distinguish a recipient's phone 100' from a caller's phone 100.

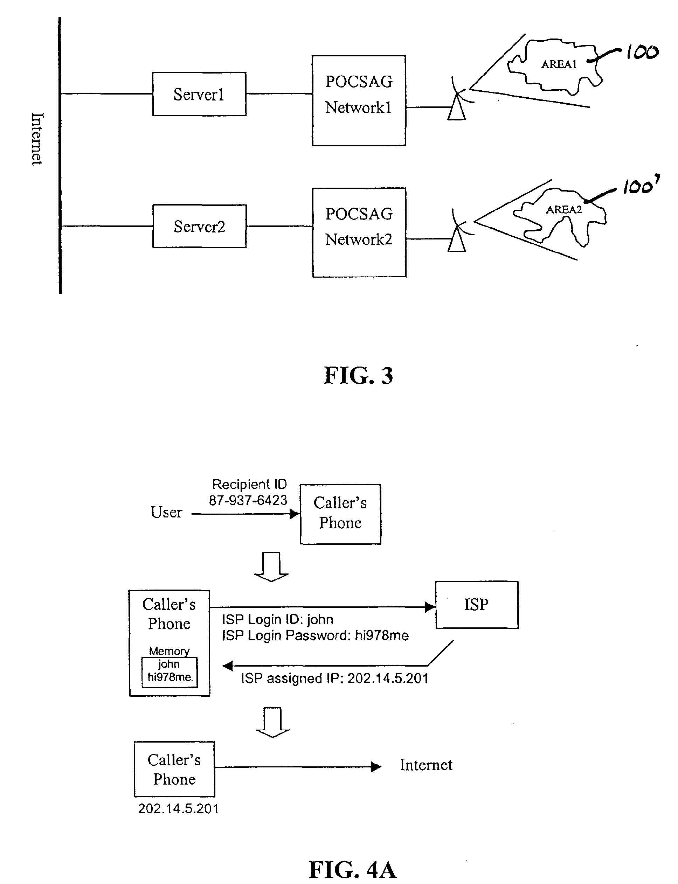

Figure 3 shows a possible environment in which the caller's and recipient's phones 100 and 100' are used in different areas 1 and 2 covered by individual POCSAG pager networks 1 and 2. The networks 1 and 2 are accessible by or otherwise connected to respective pre-existing servers 1 and 2 of the Internet. If the phones 100 and 100' are used in nearby locations, only one server and one wireless network may be involved.

The operation of the Internet phones 100 and 100' will now be described with reference to Figures 4A to 4D.

Figure 4A - In order to make a long distance voice call, the caller should pick up the handset 120 and key in a unique code (Recipient ID) assigned to the recipient. The caller's phone 100 will then initially use certain preset parameters to connect to the Internet via the local ISP (Internet Service Provider), which include an ISP phone number, an ISP Login ID and an ISP Login Password. An IP address will subsequently be assigned by the ISP to the phone 100.

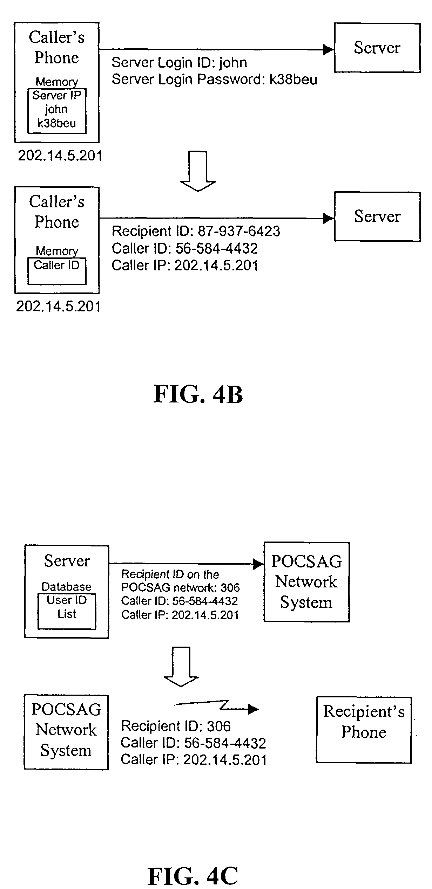

Figure 4B - Upon connection by the ISP to the server via the Internet using a Server Login ID and a Server Login Password, the caller's phone 100 will send the Recipient ID, the Caller ID and it's assigned IP address to the server.

Figure 4C - The server will then recognise and verify the Recipient ID and identify the location of the recipient's phone 100'. Subsequently, the server will access and invoke the wireless network system, such as a POCSAG pager network system, in order to issue and transmit an aforesaid call request signal to the recipient's phone 100'. The call request signal includes a modified Recipient ID as provided by the server for the POCSAG network corresponding to the original Recipient ID, and the Caller ID and its IP address.

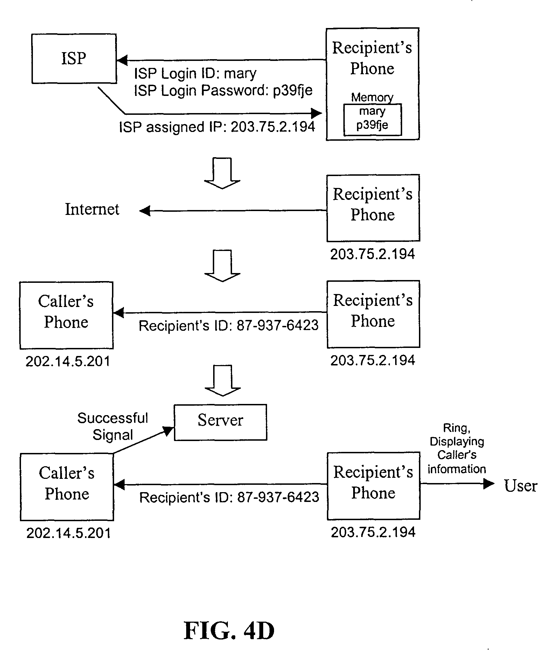

Figure 4D - Upon receipt of the call request signal, the recipient's phone 100' will automatically connect to the Internet, using its own ISP Login ID and Password and with an IP address subsequently assigned thereto by the ISP, for subsequent connection to the caller's phone 100 with the supply of its own (original) Recipient ID. If this connection is successful, the recipient's phone 100' will ring in order to notify the recipient that there is an incoming call, with the caller's information, such as the caller ID, displayed on the phone display 112'. At the same time, the caller's phone 100 will signal the server that its connection with the recipient's phone 100' has been established, in order to release the server. Upon picking up of the handset 120' by the recipient, a call conversation can be conducted.

A call will fail if the recipient is meanwhile using its phone 100' for a normal telephone call. In the case that the recipient's phone 100' is being used for another Internet call, it will signal the caller's phone 100 that it is busy via the Internet. The caller's phone 100 will then signal the server that the call is over. In the case that the recipient's phone 100' is being used for a normal call, it will not be able to signal the server. The caller's phone 100 will wait until timeout and then signal the server that the call is unsuccessful.

A call will also fail if the recipient's handset 120' is not picked up, in which case the caller will know that the recipient's phone 100' is connected and ringing but not answered, and may terminate the call by hanging up the handset 120. The recipient's phone 100' will record the missed call information, including the Caller ID, to allow the recipient to check on the display 112' and phone back later.

The Internet phone 100 is also capable of sending, and receiving, text or voice messages. The sender only needs to key in a text message, or record a voice message, and send it out together with the Recipient ID as hereinbefore described using the phone 100. The phone 100 will then connect to the Internet for passing the message and the relevant information onto the server as described above, whereupon the server will communicate with the wireless communication network system in order to transmit the message to the recipient's phone 100'. If the message comprises voice data, it may be too lengthy for transmission over the wireless network system, in which case the server will only send a request signal to the recipient's phone 100', which is similar to the aforesaid call request signal. Upon receipt of the request signal, the phone 100' will automatically connect to the Internet and download the waiting message through Internet connection.

Electronic mails may also be sent and received by using the Internet phone 100 in substantially the same manner. The only major difference lies in the sender and recipient being e-mail accounts instead of persons.

It is to be understood that, in terms of hardware, apart from the RF receiver 18 together with the related decoder 19 and antenna 20, the remaining components of the Internet phone 100 may constitute a standard Internet or IP phone. By adding an RF receiver or receptor to a known IP phone, Internet calls can be initiated via any existing wireless communication network, in a manner that is convenient (automatic) and cost effective.

The invention has been given by way of example only, and various modifications of and/or alterations to the described embodiments may be made by persons skilled in the art without departing from the scope of the invention as specified in the appended claims.

## Claims

1. An Internet phone device for use in combination with a conventional telephone circuit, a handset and an audio indicator for voice communication with an equivalent Internet phone device over the Internet including a server capable of invoking a wireless communication network, which phone device comprises an input device for entering a code identifying a recipient phone device, connection means for establishing a connection to the Internet via an ISP to provide said server with said code via the Internet for issuing and transmitting an outgoing call request signal via said network for said recipient phone device, and a radio-frequency receiver for receiving said call request signal from a caller phone device, said connection means being arranged to automatically establish a connection to said caller phone device via the Internet upon receipt of said call request signal, said audio indicator being arranged to generate an audio signal upon Internet connection established between said caller and recipient phone devices to alert the recipient to pick up the handset to conduct conversation with the caller over the Internet.

2. The Internet phone device as claimed in claim 1, being a self-contained Internet phone incorporating said conventional telephone circuit, handset and audio indicator.

3. The Internet phone device as claimed in claim 1, being an accessory for connection to a conventional telephone incorporating said telephone circuit, handset and audio indicator.

4. The Internet phone device as claimed in claim 1, wherein the connection means comprises a modem and a telephone line circuit for connection to an external telephone line, and an optional network adapter for connection to a local area network capable of connecting to the Internet.

5. The Internet phone device as claimed in claim 1, wherein the call request signal comprises a recipient ID, a caller ID and a caller IP address as assigned by an ISP.

6. The Internet phone device as claimed in claim 5, wherein the code comprises an recipient ID, and the recipient ID of the call request signal is modified for the wireless communication network corresponding to the original recipient ID.

7. The Internet phone device as claimed in claim 6, wherein said recipient phone device is arranged to connect via the Internet to said caller phone device with the supply of the original recipient ID.

8. The Internet phone device as claimed in claim 7, wherein said caller phone device is arranged, upon successful connection to said recipient phone device, to signal said server for release thereof.

9. The Internet phone device as claimed in claim 1, wherein the radio-frequency receiver is provided with an antenna for receiving said call request signal.

10. The Internet phone device as claimed in claim 1, including a microprocessor-based main control unit which connects all the other circuit components together for co-operation and control.
